Europäisches Patentamt

(19) European Patent Office

Office européen des brevets

(11) Publication number: **0 203 204**
**A1**

(12) **EUROPEAN PATENT APPLICATION**

published in accordance with Art. 158(3) EPC

(21) Application number: **85906088.1**

(22) Date of filing: **29.11.85**

Data of the international appli-
cation taken as a basis:

(86) International application number:
**PCT/JP 85/00662**

(87) International publication number:
**WO 86/03351 (05.06.86 86/12)**

(51) Int. Cl.⁴: **H 02 K 3/26, H 02 K 15/04**

(30) Priority: **30.11.84 JP 251940/84**

(43) Date of publication of application: **03.12.86**
**Bulletin 86/49**

(84) Designated Contracting States: **DE FR GB**

(71) Applicant: **FANUC LTD, 3580, Shibokusa Aza-Komanba**
**Oshino-mura, Minamitsuru-gun Yamanashi 401-05 (JP)**

(72) Inventor: **OYAMA, Shigeaki, 939-82, Katakura-cho**
**Hachioji-shi, Tokyo 192 (JP)**

(74) Representative: **Blumbach Weser Bergen Kramer**
**Zwirner Hoffmann Patentanwälte, Radeckestrasse 43,**
**D-8000 München 60 (DE)**

(54) **DISC-SHAPED STATOR OF AC MOTOR AND METHOD OF PRODUCING THE SAME.**

(57) A stator (18) having a permanent magnet-type rotor (16) mounted on a rotary shaft (12) and conductor coils (24) for excitation arranged in an opposing manner in the axial direction, for use in a brushless AC motor, and a method of manufacturing the stator. A disc-shaped stator (18) for an AC motor is manufactured as follows. The surface of an insulating substrate (26) is treated with a catalyst (28), a photosensitive film (30) is stuck thereon, the photosensitive film (30) being subjected to the photoetching so that the portion of the surface of the substrate (26) treated with the catalyst, which makes a portion of a coil pattern, is exposed, and a coil (24) for excitation is formed on the exposed surface of the substrate in the form of a flat layer by the non-electrolyte plating. On the thus formed layer of flat coil are laminated a plurality of flat coil layers, each layer for each of the electric phases and constructed by a cycle of processes consisting of the above-mentioned treatment with catalyst, application of photosensitive film, photoetching, and non-electrolyte plating. Further, the flat coil layers among the electric phases are connected by plating.

## DESCRIPTION

TITLE OF THE INVENTION

Disk Type Stator for AC Motors and a Method of
Manufacturing the Same

TECHNICAL FIELD

The present invention relates to an AC motor and,
more particularly, to the construction of a coreless
disk type stator for AC brushless motors having a rotor
formed by mounting permanent magnets on a rotary shaft,
to be disposed axially opposite to the rotor, and a
method of manufacturing such a coreless disk stator,
employing a plating process for forming the stator coils
of the coreless disk stator.

BACKGROUND ART

As is generally known, an AC motor, such as an AC
brushless servomotor, comprising one or a plurality of
coreless disk stators fixedly and axially arranged at
suitable intervals, and permanent magnet rotors mounted
on a rotary shaft so as to be located between the
adjacent coreless disk stators, respectively, does not
have a stator core and is capable of allowing an efficient permeation of the magnetic flux of the permanent
magnets and providing a high magnetic flux density,
therefore an AC brushless motor having a high torque
capacity can be formed by arranging conductors for the
stator coils of the stators at a high density. In
forming a disk stator for an AC servomotor having disk
stators, which has been widely employed in acoustic
devices or floppy disk magnetic recorders as a drive
motor, it is common to employ a method comprising the
steps of laminating a copper foil to an insulating
substrate, printing a coil pattern over the surface of
the copper foil by a photographic printing process or a
silkscreen printing process, and etching the copper foil
to form a stator coil by removing portions of the copper
foil other than a portion corresponding to the coil pattern.

In forming a superposed conductor structure having many coils by superimposing and uniting a plurality of such conventional substrates each having a single stator coil pattern formed by etching a copper foil, however, the coil patterns, namely, the conductors, of the superposed substrates must always be connected at the peripheries of the substrates by an additional process such as electrical resistance welding or soldering. Accordingly, such a superimposed conductor structure has problems in that the strength of the joints of the conductors is insufficient or the electrical connection of the conductors is unsatisfactory if portions of the conductors to be connected become contaminated. Furthermore, since an appropriate area for connecting the conductors of the superimposed substrates is necessary to facilitate the connecting work, in some cases, it is difficult to connect minute coil patterns.

DISCLOSURE OF THE INVENTION

Accordingly, it is an object of the present invention, in order to solve the foregoing problems, to provide a disk type stator for AC motors, having a plurality of layers of exciting coils formed and connected by building-up a conductive material by a plating process.

In view of the object of the invention, the present invention provides an AC motor comprising permanent magnet rotors supported on a rotary shaft, and disk type stators having exciting conductive coils and arranged axially opposite to the permanent magnet rotors, characterized in that the disk type stator is a laminated structure formed by superimposing a plurality of layers of flat exciting coils for different electrical phases on an insulating substrate by a plating process, and the flat exciting coils for the same electrical phase are connected by a plating process. The present invention also provides a method of manufacturing such a disk type stator for AC motors, comprising the steps of: forming a layer of flat coils by coating the catalyzed surface of an insulating substrate with a photosensitive film, photoetching the photosensitive film to expose portions of the catalyzed surface corresponding to a pattern of flat coils, and forming a layer of the flat coils over the exposed catalyzed surface of the insulating substrate by an electroless plating process; and repeating a plurality of times a cycle of catalyzing the surface of the previous layer of the flat coils, coating the catalyzed surface of the layer of the flat coils with the photosensitive film, photoetching the photosensitive film, and forming the next layer of flat coils, to form a plurality of layers of flat coils for different electrical phases and to connect the flat coils for the same electrical phase by an electroless plating process. The catalyzing treatment of the surface to be plated accelerates the progress of the electroless plating process or a chemical plating process.

BRIEF DESCRIPTION OF THE DRAWINGS

Figure 1 is a longitudinal sectional view of an AC motor, in a preferred embodiment, provided with disk stators embodying the present invention;

Figure 2 is a partly cutaway sectional view taken along the line II-II in Fig. 1; and

Figure 3 is a typical fragmentary sectional view of assistance in explaining a method of manufacturing a disk type stator, in preferred embodiment, according to the present invention.

BEST MODE FOR CARRYING OUT THE INVENTION

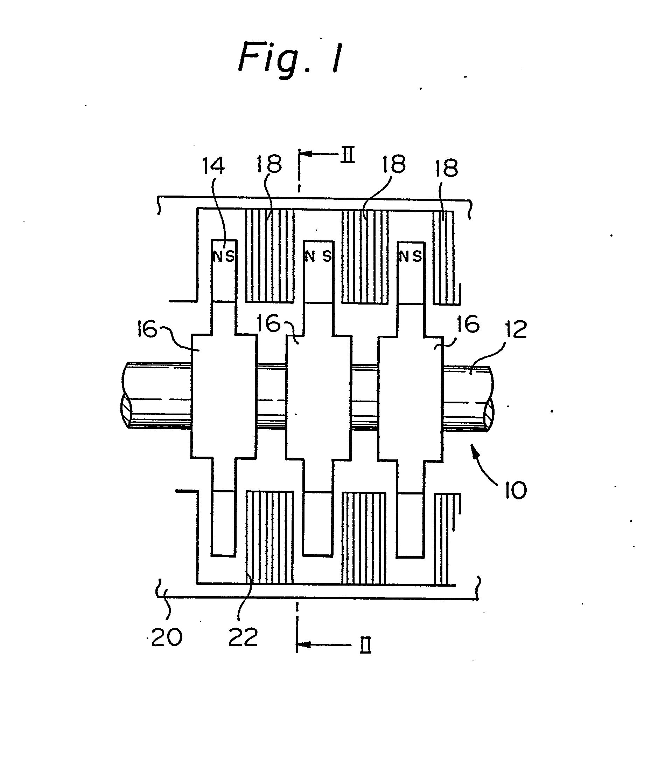

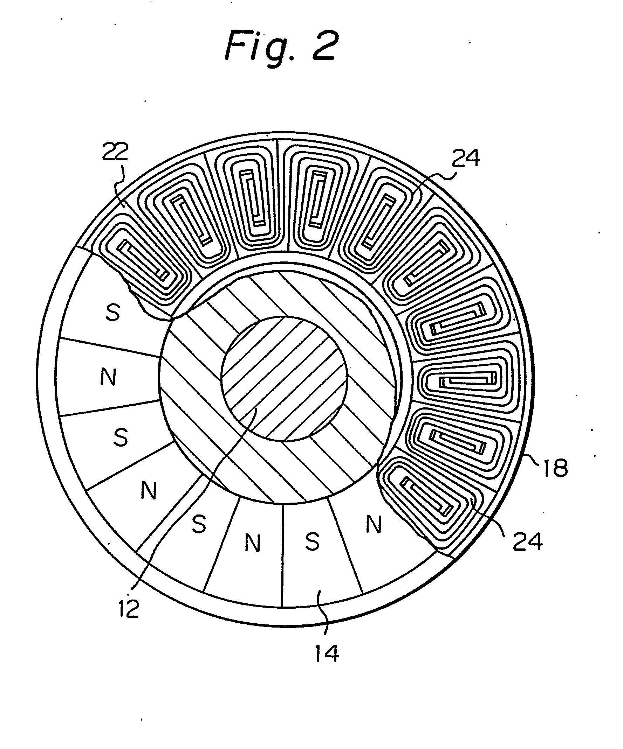

Referring to Figs. 1 and 2, an AC brushless motor 10 has a rotary shaft 12 fixedly mounted with disk rotors 16 each having permanent magnets 14 forming magnetic poles. The rotary shaft 12 and the disk rotors 16 rotate in a single unit. In this embodiment, the AC brushless motor 10 is provided with three disk rotors 16. The magnetic poles of the permanent magnets 14 of each rotor 16 are disposed axially opposite to an annular disk stator 18. The disk stators 18 each has exciting coils for a plurality of electrical phases, for example, three phases, to produce a revolving magnetic field when an exciting current is supplied thereto. When an exciting current is supplied to the disk stators 18, the revolving magnetic field of the disk stators 18 and the magnetic fluxes in magnetic fields produced by the magnetic poles of the disk rotors 16 interact to produce a torque through the rotary shaft 12. In this embodiment, the three disk stators 18 and three rotors 16 are arranged alternately along the axis of the rotary shaft 12, and a magnetic frame 20 made of a magnetic material is provided on the left end of the AC motor. Naturally, it is possible to constitute an AC motor by a combination of a single disk rotor 16 and a single disk type stator 18, however, in view of forming an AC motor capable of producing a large torque, the axial alternate arrangement of a plurality of rotors 16 and a plurality of disk type stators 18 is effective.

Each disk type stator 18 is formed in a laminated structure comprising superimposed layers 22 of exciting coils 24. In each layer 22, the spiral-shape exciting coils 24 for a single electrical phase are arranged continuously along the circumference of the disk type stator 18 in a flat plane. According to the present invention, the plane exciting coils 24 are formed by an electroless plating process or by a combination of an electroless plating process and an electroplating process, which will be described later, and layers of an insulating material, not shown, are formed between the adjacent layers 22 of exciting coils 24, respectively, to insulate the layers 22 of the exciting coils 24 from each other.

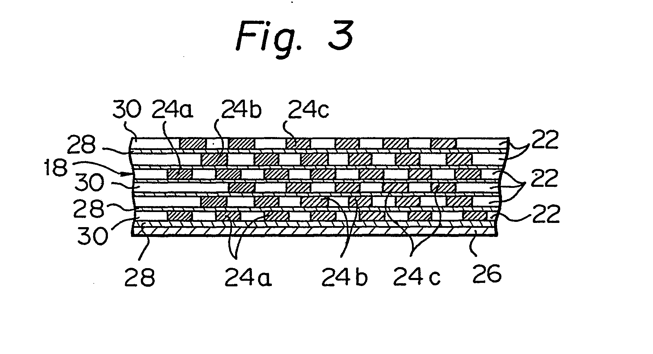

A method of manufacturing the disk type stator 18 by a plating process will be described hereinafter with reference to Fig. 3, which is a typical sectional view of assistance in explaining a method of manufacturing the disk stator 18 having the exciting coils 24 for three electrical phases. In Fig. 3, indicated at 26 is an insulating substrate having a catalyzed surface 28 necessary for electroless plating (chemical plating), which surface is illustrated in the shape of a layer of a material for the sake of explanation. The insulating substrate 26 is a thin resin plate or a thin ceramic plate. The surface of the insulating substrate 26 is coated with a photosensitive film 30, and then a hollow pattern for forming exciting coils 24a for a single electrical phase (for example, U-phase) is formed in the photosensitive film 30 by a photographic process and an etching process. As is generally known, such a photographic process and an etching process, namely, so-called photoetching process, are able to form very minute patterns. When the hollow patterns for the coils are formed in the photosensitive film 30, the catalyzed surface 28 of the insulating substrate 26 is exposed, and accordingly, copper can be deposited over the catalyzed surface 28 of the insulating substrate 26 by an electroless plating process. The plating process is carried out until the hollow pattern is filled with copper to bring the hollow pattern substantially flush with the residual photosensitive film, thereby forming plane exciting coils 24. To curtail the duration of the electroless plating process, the rate of copper deposition can be increased by switching the electroless plating process to an electroplating process after copper has been deposited to a certain extent by the electroless plating process. The first layer 22 of the exciting coils 24a is catalyzed to form another catalyzed surface 28, then the catalyzed surface 28 is coated with another photosensitive film 30, and then a hollow pattern for forming exciting coils 24b for another electrical phase (for example, V-phase) is formed. Then, plane exciting coils 24b are formed by depositing copper, namely, a conductive material, in an identical manner by the electroless plating process or a combination of the electroless plating process and the electroplating process. Thereafter, a third layer 22 of exciting coils 24c for a third electrical phase, for example, W-phase, can be formed by the same process as that for forming the second layer 22 of the exciting coils 24b. The same exciting coil forming cycle is repeated to form a fourth layer 22 of exciting coils 24a for a U-phase similar to the first layer 22, a fifth layer 22 of exciting coils 24b for a V-phase similar to the second layer 22, and a sixth layer 22 of exciting coils 24c for a W-phase similar to the third layer 22. The exciting coils 24a of the first and fourth layers, the exciting coils 24b of the second and fifth layers, and the exciting coils 24c of the third and sixth layers for the same electrical phases, respectively, can be easily connected by plating during the plating process for forming the coils by successively depositing the conductive material (copper) in holes formed in the photosensitive films so as to interconnect the related exciting coils having the same electrical phase and formed in different layers. Naturally, plating is surer and more reliable than soldering and electric resistance welding in connecting the exciting coils in different layers.

The disk stator shown in Fig. 3 is formed in a six-layer laminated structure, however, it will be readily understood that the torque produced by the interaction of the permanent magnets 14 of the rotors 16 and the magnetic field produced by the coils of the disk stator 18 can be enhanced by increasing the number of layers of the exciting coils 24 by further repeating the exciting coil forming cycle. The photosensitive films 30 shown in Fig. 3 serve also as insulating layers for insulating the adjacent layers 22 of the exciting coils 24. Accordingly, the photosensitive films 30 are required to have satisfactory insulating characteristics. Furthermore, the laminated structure is subjected to a hot press process after the completion of the exciting coil forming process to finish the laminated structure in a desired dimensional accuracy and to provide the laminate structure with heat-resistant characteristics, and accordingly, the photosensitive film must be capable of heat resistance and adhesive strength.

In the disk stator 18 shown in Fig. 3, the layers of the exciting coils 24 for three electrical phases are superimposed alternately in the sequence of electrical phases of U, V, W, U, V, W, ... so that the layers of the exciting coils 24 for the same electrical phase are arranged at intervals. This configuration of the exciting coils 24 subjects the exciting coils 24 for the different electrical phases to substantially the same magnetic effect of the magnetic field produced by the permanent magnets 14 of the rotor 16, which stabilizes the output torque of the AC motor and secures superior rotative characteristics of the same. It is also possible to obtain the same effect for stabilizing the output torque of the AC motor and securing superior rotative characteristics of the same by superimposing the layers of the exciting coils 24 in the axial direction of the rotary shaft 12 (Fig. 1) in the sequence of electrical phases of U, U, V, V, W, W, U, U, V, V, W, W, ... That is, if the layers of the exciting coils 24 for U-phase, the layers of the exciting coils 24 for V-phase, and the layers of the exciting coils 24 for W-phase are laminated in groups, respectively, and then the respective groups of the exciting coils 24 are laminated axially to form a disk type stator, it is impossible to expose the exciting coils 24 for different electrical phases to the same magnetic effect of the magnetic field produced by the permanent magnets 14 of the rotor 16, and thus the AC motor will produce an irregular output torque. Therefore such a mode of lamination of the layers of the exciting coils must be avoided.

As is apparent from the foregoing description of the preferred embodiments of the present invention, the present invention has the following various advantageous effects.

Differing from the conventional disk stator formed by etching a copper foil, the exciting coils for the same electrical phase formed in different layers can be connected by plating during the plating process for forming the exciting coils. Therefore, coils of a minute pattern can be formed in each layer owing to the advantageous characteristics of the photoetching process and thus exciting coils having high conductor density can be formed.

Since the limit of the number of conductive patterns, namely, the number of layers of the exciting coils, for the disk stator of the present invention is greater than that for the conventional disk stator formed by superimposing exciting coils formed by etching copper foils, the present invention is applicable to motors of all rated voltages.

Connection of the exciting coils by the plating process simplifies the stator manufacturing process.

Since the layers of the exciting coils for the same electrical phase are disposed at intervals in the direction of lamination, the exciting coils for the different electrical phases are subjected to the same magnetic effect of the rotor, and hence the present invention provides AC motors having an excellent performance and capable of smooth rotation of the output shaft.

0203204

## LIST OF REFERENCE CHARACTERS

10 ......... AC brushless motor
12 ......... Rotary shaft
14 ......... Permanent magnet
16 ......... Disk rotor
18 ......... Disk stator
20 ......... Magnetic frame
22 ......... Layer of flat coils
24 ......... Exciting coil
24a ....... Exciting coil
24b ....... Exciting coil
24c ....... Exciting coil
26 ......... Insulating substrate
28 ......... Catalyzed surface
30 ......... Photosensitive film

## CLAIMS

1. A disk type stator for an AC motor comprising permanent magnet rotors mounted on a rotary shaft, and disk type stators disposed axially opposite to the permanent magnet rotors, respectively, formed in a laminated structure formed by sequentially laminating a plurality of layers of plated flat coils for different electrical phases, and connecting the flat coils for the same electrical phase in the different layers by plating.

2. A disk type stator for an AC motor according to Claim 1, wherein the layers of the flat coils for the different electrical phases are arranged axially in a fixed sequence so that the layers of the flat coils for the same electrical phase are arranged at regular intervals.

3. A disk type stator for an AC motor according to Claim 1, wherein the adjacent layers of the flat coils are insulated axially from each other with a thin insulating film.

4. A disk type stator for an AC motor according to Claim 3, wherein said thin insulating film is a photosensitive film.

5. A disk type stator for an AC motor according to Claim 4, wherein said flat coils and the photosensitive film have substantially the same thickness.

6. A method of manufacturing a disk type stator for an AC motor comprising permanent magnet rotors mounted on a rotary shaft, and exciting coils arranged axially opposite to the permanent magnet rotors, respectively, which comprises steps of: coating the catalyzed surface of an insulating substrate with a photosensitive film; photoetching the photosensitive film to expose a portion of the catalyzed surface of the insulating substrate corresponding to a coil pattern; depositing a conductive material over the exposed portion of the catalyzed surface of the insulating substrate by an electroless plating process to form flat coils for an electrical phase; and repeating a plurality of times a flat coil forming cycle of catalyzing the surface of the previous layer of flat coils, coating the catalyzed surface with a photosensitive film, photoetching the photosensitive film to expose a portion of the catalyzed surface of the previous layer of flat coils corresponding to a coil pattern, and depositing the conductive material over the exposed portion of the previous layer of flat coils by an electroless plating process to form a layer of flat coils for an electrical phase, in order that laminated layers of flat coils for different electrical phases, respectively, are formed with the flat coils for the same electrical phase connected by the conductive material deposited during the electroless plating of the flat coils.

7. A method of manufacturing a disk stator for an AC motor, as recited in Claim 6, wherein the conductive material is deposited to form the flat coils in the flat coil forming cycle first by an electroless plating process and then by an electroplating process in a thickness substantially the same as that of said photosensitive film.

*Fig. I*

# Fig. 2

## Fig. 3

# INTERNATIONAL SEARCH REPORT

0203204

International Application No. PCT/JP85/00662

## I. CLASSIFICATION OF SUBJECT MATTER (if several classification symbols apply, indicate all) [3]

According to International Patent Classification (IPC) or to both National Classification and IPC

Int. Cl[4]    H02K 3/26, 15/04

## II. FIELDS SEARCHED

| Minimum Documentation Searched [4] | |
|---|---|
| Classification System | Classification Symbols |
| IPC | H02K 3/04, 3/26, 15/04, H01F 5/00 |

| Documentation Searched other than Minimum Documentation to the Extent that such Documents are Included in the Fields Searched [5] |
|---|
| Jitsuyo Shinan Koho          1926 – 1985<br>Kokai Jitsuyo Shinan Koho    1971 – 1985 |

## III. DOCUMENTS CONSIDERED TO BE RELEVANT [14]

| Category* | Citation of Document, [16] with indication, where appropriate, of the relevant passages [17] | Relevant to Claim No. [18] |
|---|---|---|
| Y | JP, U, 51-101514 (Kyoto Ceramic Co., Ltd.), 14 August 1976 (14. 08. 76), Figs. 8, 9 (Family: none) | 1 – 7 |
| Y | JP, B1, 40-28729 (Mitsubishi Electric Corporation), 21 December 1965 (21. 12. 65), Fig. 7 (Family: none) | 1 – 7 |
| Y | JP, U, 56-9842 (Toshiba Corporation), 28 January 1981 (28. 01. 81) (Family: none) | 1 – 7 |
| Y | JP, A, 58-215941 (Hitachi, Ltd.), 15 December 1983 (15. 12. 83) (Family: none) | 2 |
| Y | JP, A, 56-78342 (Kangyo Denki Kiki Kabushiki Kaisha), 27 June 1981 (27. 06. 81), Column 7, lines 5 to 7 & US, A, 4340833 & EP, A2, 30008 & EP, A3, 30008 | 5, 7 |

* Special categories of cited documents: [15]

"A"  document defining the general state of the art which is not considered to be of particular relevance

"E"  earlier document but published on or after the international filing date

"L"  document which may throw doubts on priority claim(s) or which is cited to establish the publication date of another citation or other special reason (as specified)

"O"  document referring to an oral disclosure, use, exhibition or other means

"P"  document published prior to the international filing date but later than the priority date claimed

"T"  later document published after the international filing date or priority date and not in conflict with the application but cited to understand the principle or theory underlying the invention

"X"  document of particular relevance; the claimed invention cannot be considered novel or cannot be considered to involve an inventive step

"Y"  document of particular relevance; the claimed invention cannot be considered to involve an inventive step when the document is combined with one or more other such documents, such combination being obvious to a person skilled in the art

"&"  document member of the same patent family

## IV. CERTIFICATION

| Date of the Actual Completion of the International Search [2] | Date of Mailing of this International Search Report [2] |
|---|---|
| February 20, 1986 (20. 02. 86) | March 3, 1986  (03. 03. 86) |
| International Searching Authority [1] | Signature of Authorized Officer [20] |
| Japanese Patent Office | |

Form PCT/ISA/210 (second sheet) (October 1981)